# EUROPÄISCHE PATENTSCHRIFT

(11) **EP 1 750 217 B1**
(45) Veröffentlichungstag und Bekanntmachung des Hinweises auf die Patenterteilung: **23.03.2011**
(21) Anmeldenummer: 06014293.2
(22) Anmeldetag: 10.07.2006
(51) Int. Cl.: G06F 21/00, G07F 7/10, G11C 16/22, G06F 12/14

(54) **Absicherung von Speichereinhalten eines Datenträgers**
Protection of stored contents of a data carrier
Protection de contenus de mémoire d'un support de données

(30) Priorität: 04.08.2005 DE 102005036738
(43) Veröffentlichungstag der Anmeldung: 07.02.2007
(73) Patentinhaber: Giesecke & Devrient GmbH, 81677 München (DE)
(72) Erfinder: Schmalz, Frank, 82008 Unterhaching (DE); Kuhn, Torge, 82319 Starnberg (DE); Hildinger, Peter, 82319 Starnberg (DE); Ness, Werner, 85716 Unterschleissheim (DE); Treger, Jörn, 83022 Rosenheim (DE); Pinzinger, Robert, 81543 München (DE)
(74) Vertreter: Klunker . Schmitt-Nilson . Hirsch

(56) Entgegenhaltungen:
- EP-A- 1 577 734
- WO-A2-99/35554
- WO-A2-2004/049349
- DE-A1- 10 258 178
- HAGAI BAR-EL ET AL: "The Sorcerer's Apprentice Guide to Fault Attacks" INTERNET CITATION, [Online] 7. Mai 2004 (2004-05-07), XP002329915 Gefunden im Internet: URL:http://web.archive.org/web/20041016071 838/eprint.iacr.org/2004/100> [gefunden am 2005-05-27]

## Beschreibung

Die Erfindung betrifft ein Verfahren zum Absichern von Speicherinhalten eines portablen Datenträgers und einen derartigen portablen Datenträger, insbesondere eine Chipkarte, Smart Card oder eine sichere Multimedia-Karte.

Mit dem zunehmenden Einsatz von portablen Datenträgern für kryptographische Zwecke, beispielsweise in Form von Chipkarten oder Smart-Cards zum digitalen Signieren, Ver-/Entschlüsseln oder biometrischen Identifizieren oder Authentisieren, wächst auch die Anzahl der Manipulationsversuche und Angriffe auf derartige Datenträger unter Ausnutzung physikalischer und/oder logischer Schwachstellen. Ein besonderes Sicherheitsrisiko stellt in diesem Zusammenhang die "Differentielle Fehleranalyse" (DFA; Differential Fault Analysis) dar.

Als prinzipielle Gegenmaßnahme bietet sich hierbei das wiederholte Durchführen der sicherheitskritischen Routine mit anschließendem Ergebnisvergleich an, wobei der Datenträger bei einer Abweichung der Ergebnisse in einen sicheren Zustand überführt wird, da diese Abweichung mit großer Wahrscheinlichkeit auf die physikalischen Einwirkungen eines kryptographischen Angriffs zurückzuführen ist. Dies bringt jedoch für viele Anwendungen erhebliche Performanceprobleme mit sich. Außerdem kann ein Angreifer derartige doppelt ausgeführte Routinen bzw. Speicherzugriffen gezielt lokalisieren, um diese zu manipulieren oder auszuwerten.

EP 0 914 640 B1 offenbart die Absicherung sicherheitskritischer Information in einem Datenträger gegen unerlaubten Zugriff durch Verschlüsseln mit temporären Schlüsseln. Ein ständiges Ändern des verwendeten Schlüssels ist jedoch bei vielen Anwendungen nicht möglich und erfordert überdies ein umfangreiches Schlüssel-Management.

Die WO 2004/ 049349 A2, WO 99/ 35554 A2 und DE 102 21 179 A1 offenbaren Verfahren, bei denen Datenmanipulationen aufgrund externer physikalischer Einwirkungen durch Speichertests aufgedeckt werden können, indem die aktuellen Speicherinhalte mit Referenzinhalten verglichen werden. Dabei schlägt die WO 2004/ 049349 A2 vor, den Speichertest durchzuführen, wenn kein regulärer Speicherzugriff erfolgt, während in der DE 102 21179 A1 ein Speichertest jeweils vor einer sicherheitskritischen Operationen durchgeführt wird. Beide Ansätze haben jedoch den Nachteil, dass die zeitliche Korrelation zwischen dem Speichertest und der Aktivität des portablen Datenträgers wiederum einen Ansatzpunkt für einen kryptographischen Angriff bieten könnte. So bleiben Angriffe möglicherweise unentdeckt, da sie gezielt zu Zeitpunkten durchgeführt werden, zu denen gerade kein Speichertest erfolgt.

DE 102 58178 A1 zeigt eine Schaltung, welche in einem Zwischenspeicher abgelegte Zwischenergebnisse zunächst sichert, um danach ein Testmuster in den Zwischenspeicher zu laden und erneut auszulesen. Wenn ein Unterschied zwischen dem geladenen und dem ausgelesenen Testmuster erkannt wird, werden Maßnahmen gegen ein Ausspionieren der Schaltung ergriffen.

Demzufolge liegt der vorliegenden Erfindung die Aufgabe zugrunde, Speicherinhalte besser vor Ausspähung durch einen Angreifer zu schützen. Diese Aufgabe wird erfindungsgemäß durch ein Verfahren und einen portablen Datenträger mit den Merkmalen der unabhängigen Ansprüche gelöst. In davon abhängigen Ansprüchen sind vorteilhafte Ausgestaltungen und Weiterbildungen der Erfindung angegeben.

Ein portabler Datenträger gemäß der vorliegenden Erfindung umfasst einen beschreibbaren, veränderlichen Speicher mit sicherheitskritischen Speicherinhalten und eine mit einem Prüfmodul zusammenwirkende Prüfsteuerung zu deren Absicherung. Das Prüfmodul wird von der Prüfsteuerung aktiviert, um nach Verstreichen einer zufällig bestimmten Zeitspanne einen Speichertest durchzuführen, bei dem ein zu prüfender Speicherinhalt zumindest eines Speicherbereichs des veränderlichen Speichers mit einem vorgegebenen Speicherinhalt verglichen wird.

Die zufällige Auswahl der Zeitspanne führt dazu, dass es keine zeitliche Korrelation zwischen Speichertest und Speicherzugriffen oder sonstigen Operationen des Datenträgers gibt. Der Zeitpunkt des Speichertests ist somit nicht vorhersagbar, was eine höhere Sicherheit garantiert.

Falls der zu prüfende Speicherinhalt mit dem vorgegebenen Speicherinhalt übereinstimmt, kann davon ausgegangen werden, dass der zu prüfende Speicherinhalt nicht durch eine externe physikalische Einwirkung mit dem Zweck des Ausspähens sicherheitskritischer Daten gestört wurde. Der portable Datenträger kann dann vom Benutzer weiter uneingeschränkt und ohne Sicherheitsrisiko verwendet werden. Das Prüfmodul wird dann von der Prüfsteuerung nach einer weiteren zufällig bestimmten Zeitspanne erneut aktiviert, um einen weiteren Speichertest durchzuführen.

Falls das Prüfmodul bei einem Speichertest eine Abweichung des zu prüfenden Speicherinhalts vom vorgegebenen Speicherinhalt feststellt, deutet dies auf einen Angriff hin, da Bitfehler zumeist die Folge eines solchen Angriffs sind. Mit dem beschriebenen Speichertest lassen sich solche Bitfehler feststellen. In diesem Fall wird der portable Datenträger in einen sicheren Zustand überführt.

In diesem sicheren Zustand des Datenträgers muss sichergestellt sein, dass keine weiteren Operationen oder zumindest keine Speicherzugriffe auf sicherheitskritische Informationen des Datenträgers erfolgen können bzw. ein Ausspähen sicherheitskritischer Informationen nicht möglich ist. In einem derartigen sicheren Zustand ist ein intelligenter Datenträger, wie z.B. eine Chipkarte, beispielsweise vollständig funktionsunfähig. Auch kann der Datenträger logisch oder physikalisch zerstört, für einen bestimmten Zeitraum deaktivieren oder, im Falle einer Chipkarte, von einem Kartenterminal einbehalten werden.

Die Zeitspannen zwischen zwei Speichertests werden bei jedem neuen Speichertest durch einen Zufallsgenerator neu bestimmt. Hierbei ist es zweckmäßig, dass der Zufallsgenerator die Zufallszahlen möglichst gleichverteilt generiert und an die Prüfsteuerung liefert, die die Zufallszahl als Länge einer Zeitspanne interpretiert und das Prüfmodul nach Verstreichen der Zeitspanne aktiviert. Insbesondere ist es vorteilhaft, den Zufallsgenerator so einzurichten, dass aus den Zeitspannen der Vergangenheit nicht auf eine zukünftige Zeitspanne geschlossen werden kann, damit eine Vorhersage des Zeitpunkts des nächsten Speichertests nicht möglich ist.

Bei einer bevorzugten Ausführungsform bildet der portable Datenträger eine Chipkarte mit Prozessor, eine SmartCard, eine sichere Multimedia-Karte, einen intelligenten USB-Memorystick, oder einen ähnlichen intelligenten Datenträger. Falls derartige Datenträger einen Permanentspeicher umfassen - z.B. der ROM-Speicher einer Chipkarte oder einer SmartCard - ist es vorteilhaft, den vorgegebenen Speicherinhalt in dem Permanentspeicher abzulegen, um eine Veränderung oder Manipulation der vorgegebenen Daten auszuschließen. Der veränderliche Speicher, der sicherheitskritische Daten enthält und dessen Speicherinhalt daher auf Unversehrtheit zu prüfen ist, besteht in der Regel aus flüchtigen und/oder nichtvolatilen Speichern, wie z.B. dem RAM-Speicher bzw. dem EEPROM-Speicher einer Chipkarte.

Die Prüfsteuerung und/oder das Prüfmodul kann als Softwarelösung konzipiert sein, so dass diese von dem Prozessor des Datenträgers ausgeführt werden kann. Bei Verwendung einer Chipkarte ist es darüber hinaus zweckmäßig, die Prüfsteuerung und das Prüfmodul in das Betriebssystem der Chipkarte zu integrieren, das unveränderlich in deren ROM-Speicher abgelegt ist. Neben dieser Softwarelösung ist auch eine äquivalente Hardwarelösungen möglich, indem die Funktionalität der Prüfsteuerung und des Prüfmoduls mittels einer logischen Schaltung bzw. eines vom Hauptprozessor separaten Sicherheits-Coprozessors realisiert wird.

Bei einer vorteilhaften Ausgestaltung wird bei einem Speichertest nicht nur der Speicherinhalt eines einzelnen Speicherbereichs des veränderliche Speichers überprüft, sondern es werden mehrere Speicherbereiche unabhängig voneinander zur gemeinsamen Prüfung ausgewählt. Ebenso kann bei aufeinander folgenden Speichertests der/die zu prüfende(n) Speicherbereich(e) variiert werden, so dass mit zunehmender Betriebsdauer des portablen Datenträgers der gesamte veränderliche Speicher vorzugsweise möglichst gleichmäßig überprüft wird.

Bei der Auswahl der zu prüfenden Speicherbereiche des veränderlichen Speichers können besonders solche Speicherbereiche ausgewählt werden, die sicherheitsrelevante Informationen umfassen, beispielsweise kryptographische Schlüssel, Authentisierungscodes, Passwörter oder ähnliches. Andererseits kann es auch sinnvoll sein, Speicherbereiche im veränderlichen Speicher anzulegen, die keine nutzbare Information repräsentieren und deren einziger Zweck es ist, Gegenstand von Speichertests zu sein. Derartige Speicherinhalte bleiben über die Betriebesdauer des Datenträgers unverändert und eignen sich somit besonders für Speichertests. Auf solche Speicherinhalte wird zwar bei Betrieb des Datenträgers nicht zugegriffen, bei geeigneter Anordnung im veränderlichen Speicher werden sie jedoch mit hoher Wahrscheinlichkeit durch eine manipulatorische physikalische Einwirkung gestört und können somit zur Erkennung eines kryptographischen Angriffs herangezogen werden. Hierbei ist es zweckmäßig, derartige Speicherbereiche in einem vorbestimmten möglichst großflächig ausgebildeten Muster über den veränderlichen Speicher zu verteilen.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: ein Ablaufdiagramm des erfindungsgemäßen Verfahrens; und
- Figur 2: eine zur Durchführung des erfindungsgemäßen Verfahrens eingerichtete Chipkarte.

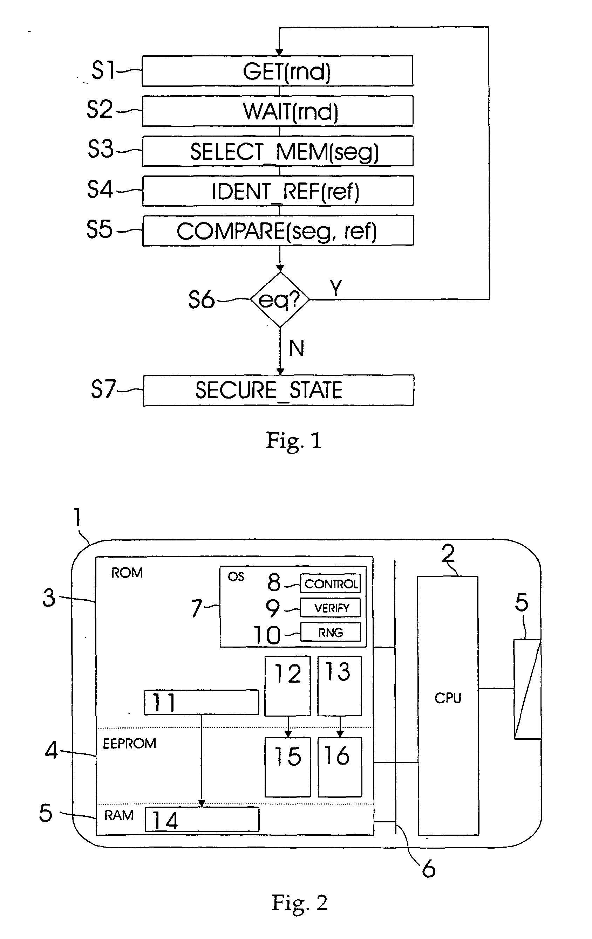

Figur 1 zeigt ein Ablaufdiagramm eines erfindungsgemäßen Verfahrens zum Detektieren von DFA-Angriffen, während Figur 2 eine Chipkarte 1 illustriert, die zur Durchführung des erfindungsgemäßen Verfahrens ausgestattet und eingerichtet ist, um den Speicherinhalt 14, 15, 16 des veränderlichen RAM- und EEPROM-Speichers 4, 5 der Chipkarte 1 abzusichern.

Das erfindungsgemäße Prinzip beruht auf einem stochastisch wiederholt durchgeführten und insofern zeitlich nicht vorhersagbaren Speichertest. Dieser wird durch einen Vergleich des Speicherinhalts bestimmter Speicherbereiche 14,15,16, die sowohl in einem flüchtigen RAM-Speicher 5 als auch in einem nichtvolatilen EEPROM-Speicher 4 liegen können, mit vorgegebenen Speicherinhalten 11,12,13 durchgeführt, die im permanenten ROM-Speicher 3 der Chipkarte 1 abgelegt sind und als Referenz bzw. Soll-Wert dienen. Falls die einander entsprechenden Speicherinhalte 11/14, 12/15 und 13/16 voneinander abweichen, ist dies mit hoher Wahrscheinlichkeit auf einen kryptographischen Angriff bzw. die damit verbundene manipulierende physikalische Einwirkung auf die Speicherinhalte 14, 15, 16 des veränderlichen Speichers 4, 5 zurückzuführen. Dabei sind die vorgegebenen Referenz-Speicherinhalte 11,12,13 vor derartigen Manipulationen ausreichend geschützt, da sie im permanenten ROM-Speicher 3 der Chipkarte abgelegt sind. Es ist jedoch auch möglich, die vorgegebenen Speicherinhalte 11,12,13 in einem der veränderlichen Speicher 4, 5 abzulegen, da auch dann eine Störung der Datenintegrität erkannt werden würde. Bei den Speicherinhalten 14, 15, 16 des veränderlichen Speichers 4, 5 kann es sich beispielsweise um Daten handeln, auf die im Rahmen üblicher Prozesse nicht zugegriffen wird, die also nur dem Speichertest dienen.

Der den eigentlichen Speichertest bildende Vergleichsschritt S5 wird von einem Prüfmodul 9 durchgeführt, das bei der in Figur 2 dargestellten Chipkarte 1 als Programmroutine - also als Softwarekomponente - ausgebildet ist, die zusammen mit einer Prüfsteuerung 8 und einem Zufallsgenerator 10 als weitere Programmroutinen im Betriebssystem 7 der Chipkarte 1 integriert und in deren ROM-Speicher 3 abgelegt ist. Die Routinen 8, 9,10 werden von dem Prozessor 2 der Chipkarte 1 ausgeführt, der die eigentlichen Berechnungen vornimmt. Ferner besitzt die Chipkarte 1 eine Kommunikationsschnittstelle 5 zum Datenaustausch mit einem Kartenlesegerät und ein Bussystem 6 zum internen Datentransfer.

Den Verfahrensablauf steuert die Prüfsteuerung 8, die im Ausführungsbeispiel der Figur 2 ebenfalls Teil des Betriebssystems 7 ist, indem sie zunächst eine Zeitspanne zufälliger Länge bestimmt (Schritt S1) und das Prüfmodul 9 jeweils erst nach Ablauf (Schritt S2) dieser Zeitspanne aktiviert (Schritt S5). Dieser Prozess wird solange fortdauernd schleifenartig wiederholt, wie keine Abweichung der zu prüfenden Speicherinhalte 14, 15, 16 zu den vorgegebenen Speicherinhalten 11,12,13 festgestellt wird (Schritt S6).

Die bei jedem Schleifendurchlauf zufällig bestimmten Zeitspannen zwischen zwei Vergleichsschritten S5 führen zu einem vorteilhaften, zeitlich höchst unregelmäßigen Timing der Speichertests. Die variierenden und stochastisch unabhängig ermittelten Zeitspannen zwischen je zwei aufeinander folgenden Prüfschritten S5 werden jeweils in Schritt S1 durch den Zufallsgenerator 10 bestimmt, der möglichst gleichverteilte Zufallszahlen liefert, so dass selbst ein Protokollieren der verstrichenen Zeitspannen nicht für eine Vorhersage zukünftiger Zeitspannen bzw. Zeitpunkte des Speichertests genutzt werden kann. Dabei kann es zweckmäßig sein, eine minimale Zeitspanne und eine maximale Zeitspanne vorzugeben, indem die Zufallszahlen nur innerhalb eines vorgegebenen Zahlenintervalls gleichverteilt ausgewählt werden.

Die Zufallszahl wird in Schritt S2 von der Prüfsteuerung 8 in eine Zeitspanne umgesetzt, indem sie beispielsweise als Millisekunden oder Sekunden interpretiert wird. Nach Verstreichen der Zeitspanne wird der Vergleichsschritt S5 durchgeführt, wobei die zu prüfenden Speicherbereiche 14, 15, 16 zunächst in Schritt S3 ausgewählt und die entsprechend zugehörigen vorgegebenen Speicherinhalte 11, 12, 13 in Schritt S4 identifiziert werden müssen. Die Schritte S3 und S4 können natürlich auch während oder vor dem Schritt S2 durchgeführt werden.

Falls sich in Schritt S5 herausstellt, dass die zu prüfenden Speicherinhalte 14, 15, 16 mit den vorgegebenen Speicherinhalten 11, 12,13 übereinstimmen, wird in Schritt S6 zum nächsten Schleifendurchlauf wieder auf Schritt S1 verzweigt. Falls sich jedoch in Schritt S5 Abweichungen zwischen den zu prüfenden Speicherinhalten 14, 15,16 und den vorgegebenen Speicherinhalten 11, 12, 13 ergeben, wird der betreffende Datenträger bzw. die Chipkarte 1 durch Schritt S6 unmittelbar in einen sicheren Zustand überführt (Schritt S7), da die Abweichung als kryptographischer Angriff interpretiert wird.

Durch Ergreifen geeigneter Maßnahmen wird gewährleistet, dass im sicheren Zustand ein über den eigentlichen detektierten Angriff hinausgehendes Ausspähen der Daten des Datenträgers nicht möglich ist. Dies kann auf unterschiedliche Weise erreicht werden und ist oft auch von der Art des Datenträgers abhängig. So kann der Datenträger in Schritt S7 beispielsweise sofort unbrauchbar gemacht werden. Bei der Chipkarte 1 könnte das einfach dadurch realisiert werden, dass sie von einem Kartenlesegerät einbehalten wird. Andere Möglichkeiten sind das Deaktivieren des Datenträgers, so dass keine weiteren Speicherzugriffe durchgeführt werden, das sofortige Löschen aller veränderlichen Speicher 4, 5 und/oder das Übertragen eines Warnhinweises an eine entsprechende Stelle, die weitere Maßnahmen einleitet.

Angriffe, die auf dem Induzieren von Bitfehlern und nachträglichen Auswerten der daraus resultierenden fehlerhaften Ergebnisse beruhen, werden in der Regel häufig durchgeführt, um genügend Information über den auszuspähenden sicherheitskritischen Prozess bzw. die dabei verwendeten Schlüssel und geheimen Daten zu erhalten. Da die Zeitpunkte der Speichertests S5 aufgrund des zufälligen Timings jedoch nicht vorhersagbar sind, wird ein wiederholtes Stören der veränderlichen Daten 14, 15, 16 mit hoher Wahrscheinlichkeit erkannt.

Bei einer erfindungsgemäßen Chipkarte 1 ist es zweckmäßig, die vorgegebenen Speicherinhalte 11,12,13 in dem unveränderlichen ROM-Speicher 3 abzulegen. Diese werden dann zusammen mit dem Betriebssystem 9 der Chipkarte 1 bei der Herstellung der ROM-Maske - also der Vorlage des Inhalts des ROM-Speichers - bei der Chipherstellung festgelegt. Hierin können, wie bereits zuvor erwähnt, sowohl Speicherinhalte 11 für den flüchten RAM-Speicher 5 als auch Speicherinhalte 12, 13 für den nichtvolatilen EEPROM-Speicher abgelegt werden. Im Falle von RAM-Speicherinhalten 11 werden diese beim Start der Chipkarte 1 vom ROM-Speicher 3 in den RAM-Speicher 5 kopiert und bilden dort die dann zu prüfenden Speicherinhalte 14.

Es ist zweckmäßig, gerade solche Speicherinhalte 14, 15, 16 einem regelmäßigen Abgleich mit den vorgegebenen Speicherinhalten 11, 12, 13 zu unterziehen, die sicherheitsrelevante Informationen repräsentieren, wie z.B. kryptographische Schlüssel oder Passwörter, da diese aufgrund des häufigen Zugriffs identifizierbar werden und der eigentliche Gegenstand kryptographischer Angriffe sind.

Da die im Rahmen von Angriffen durchgeführten physikalischen Einwirkungen jedoch in aller Regel sehr unspezifisch sind und ihre Wirkung somit nicht bitgenau gesteuert werden kann, werden meist mehrere Bits in einem Speichersegment oder einer lokalen Region des veränderlichen Speichers gleichzeitig gestört. Deshalb kann es auch sinnvoll sein, einen Speichertest von Speicherbereichen 14, 15 und 16 durchzuführen, die keinerlei sicherheitsrelevante Information besitzen, da derartige Speicherbereiche bei einer geeigneten Anordnung in veränderlichen Speichern 4, 5 durch die physikalischen Einwirkungen eines kryptographischen Angriffs mit hoher Wahrscheinlichkeit auch gestört werden. Insoweit ist es vorteilhaft, Speicherinhalte, die für die Funktion des Datenträgers oder seiner Routinen keinerlei sinnvolle Information repräsentieren, sondern einzig dem Zweck dienen, regelmäßig geprüft zu werden, in einem bestimmten Muster über den Speicher 4, 5 zu verteilen. Dieses Muster aus zu prüfenden Speicherbereichen 14, 15,16 kann dann möglichst großflächig im veränderlichen Speicher 4, 5 verteilt sein, damit beliebige Störungen des Speichers 4, 5 zu Bitfehlern in den zu prüfenden Speicherinhalten 14, 15,16 führen und detektiert werden können. Im Extremfall ist im veränderlichen Speicher 4, 5 sogar eine Schachbrettanordnung denkbar, bei der die weißen Felder sinnvolle und zu schützende Informationsbits darstellen und die schwarzen Felder reine Prüfbits, die auf dem Datenträger an anderer Stelle als die vorgegebenen Speicherinhalte nochmals vorliegen.

Ebenso ist es vorteilhaft, dass die Prüfsteuerung 8 beim Auswählen der zu prüfenden Speicherbereiche 14, 15, 16 in Schritt S3 bei jedem Schleifendurchlauf einen oder mehrere Speicherbereiche auswählt, die verschieden von den im vorhergehenden Schleifendurchlauf geprüften Speichebereichen sind. Es kann so eine möglichst homogene Überprüfung des gesamten veränderlichen Speichers 4, 5 beim Betrieb des Datenträgers bzw. der Chipkarte 1 sichergestellt werden.

Alternativ oder ergänzend zu den bisher beschriebenen Ausführungsformen kann auch der Inhalt eines unveränderlichen Speichers, wie beispielsweise dem ROM-Speicher, überprüft werden. In einer einfachen Variante wird ein Referenzwert aus dem ROM-Speicher zweimal ausgelesen, um dann die beiden ausgelesenen Werte miteinander zu vergleichen. Prinzipiell kann derart verifiziert werden, ob die Prüfung noch grundsätzlich funktioniert. Sollte die Prüfung diesen Selbsttest nicht mehr bestehen, kann eine Blockierung oder Deaktivierung des tragbaren Datenträgers erfolgen, die nicht durch den normalen Benutzer des Datenträgers aufgehoben werden kann.

## Patentansprüche

1. Verfahren zum Absichern von Speicherinhalten in einem Speicher (4, 5) eines portablen Datenträgers (1) mit Prozessor (2) und Zufallsgenerator (10), umfassend die Schritte:
- Vergleichen (S5) eines zu prüfenden Speicherinhalts (14,15,16) zumindest eines Speicherbereichs des Speichers (4, 5) mit einem vorgegebenen Speicherinhalt (11,12,13);
- fortdauerndes Wiederholen des Vergleichens (S5), solange der zu prüfende Speicherinhalt (14,15,16) mit dem vorgegebenen Speicherinhalt (11,12,13) übereinstimmt; und
- Überführen des Datenträgers (1) in einen sicheren Zustand, falls der zu prüfende Speicherinhalt (14,15,16) von dem vorgegebenen Speicherinhalt (11,12,13) abweicht, wobei der Datenträger (1) im sicheren Zustand keinen Zugriff auf den Speicher (4, 5) zulässt;
**dadurch gekennzeichnet, dass** für jedes Vergleichen (S5) jeweils eine Zeitspanne zufällig durch den Zufallsgenerator (10) bestimmt wird, nach deren Verstreichen (S2) der Schritt des Vergleichens (S5) durchgeführt wird.

2. Verfahren nach Anspruch 1, **dadurch gekennzeichnet, dass** der Speicher (4,5) ein veränderlicher Speicher ist.

3. Verfahren nach einem der Ansprüche 1 oder 2, **dadurch gekennzeichnet, dass** für jedes Vergleichen (S5) der zumindest eine Speicherbereich (14,15, 16) des veränderlichen Speichers (4, 5) jeweils neu ausgewählt wird (S3).

4. Verfahren nach Anspruch 3, **dadurch gekennzeichnet, dass** die jeweils neu ausgewählten Speicherbereiche (14, 15, 16) beim fortdauernden Wiederholen so ausgewählt werden (S3), dass nach und nach alle Speicherbereiche des veränderlichen Speichers (4, 5) ausgewählt werden.

5. Verfahren nach einem der Ansprüche 1 bis 4, **dadurch gekennzeichnet, dass** der vorgegebene Speicherinhalt (11,12,13) in einem unveränderlichen Speicherbereich (3) des Datenträgers (1) abgelegt ist, insbesondere in einem ROM-Speicher.

6. Verfahren nach Anspruch 5, **dadurch gekennzeichnet, dass** der vorgegebene Speicherinhalt (11,12,13) bei einer Erstellung einer ROM-Maske festgelegt wird.

7. Verfahren nach einem der Ansprüche 1 bis 6, **dadurch gekennzeichnet, dass** der zu prüfende Speicherinhalt (14,15,16) sicherheitskritische Daten, insbesondere einen kryptographischen Schlüssel, umfasst.

8. Verfahren nach einem der Ansprüche 1 bis 7, **dadurch gekennzeichnet, dass** der zu prüfende Speicherinhalt (14,15,16) nur dem Zweck des Vergleichens mit dem vorgegebenen Speicherinhalt (11, 12, 13) dient.

9. Verfahren nach Anspruch 8, **dadurch gekennzeichnet, dass** der zu prüfende Speicherinhalt (14, 15, 16) über die Betriebsdauer des Datenträgers unverändert ist.

10. Verfahren nach einem der Ansprüche 1 bis 9, **dadurch gekennzeichnet, dass** der zu prüfende Speicherinhalt (14, 15, 16) in einem vorbestimmten Muster über den veränderlichen Speicher (4, 5) verteilt vorliegt.

11. Verfahren nach einem der Ansprüche 1 bis 10, **dadurch gekennzeichnet, dass** der Schritt des Vergleichens zumindest für einen Speicherinhalt eines unveränderlichen Speicherbereichs erfolgt, um die Funktion des Vergleichens selbst zu überprüfen.

12. Portabler Datenträger (1), umfassend einen Prozessor (2), einen Speicher (4, 5), einen Zufallsgenerator (10) und ein Prüfmodul (9), das eingerichtet ist, einen zu prüfenden Speicherinhalt (14, 15, 16) zumindest eines Speicherbereichs des veränderlichen Speichers (4, 5) mit einem vorgegebenen Speicherinhalt (11,12,13) zu vergleichen, wobei
- der portable Datenträger (1) des weiteren eine Prüfsteuerung (8) umfasst, die eingerichtet ist, das Prüfmodul (9) solange jeweils nach Verstreichen (S2) einer zufällig bestimmten Zeitspanne zu aktivieren, wie der zu prüfende Speicherinhalt (14, 15, 16) mit dem vorgegebenen Speicherinhalt (11,12,13) übereinstimmt, wobei die Zeitspanne von dem Zufallsgenerator (10) für jedes erneute Aktivieren neu bestimmt wird (S1);
- das Prüfmodul (9) eingerichtet ist, durch die Prüfsteuerung (8) aktiviert zu werden; und
- die Prüfsteuerung (8) eingerichtet ist, den Datenträger (1) in einen sicheren Zustand zu überführen (S7), falls der zu prüfende Speicherinhalt (14, 15,16) von dem vorgegebenen Speicherinhalt (11,12,13) abweicht, wobei der Datenträger (1) im sicheren Zustand keinen Zugriff auf den Speicher (4, 5) zulässt.

13. Datenträger (1) nach Anspruch 12, **dadurch gekennzeichnet, dass** der Datenträger (1) einen unveränderlichen Speicher (4, 5) umfasst, insbesondere einen ROM-Speicher, in dem zumindest der vorgegebene Speicherinhalt (11, 12,13) abgelegt ist.

14. Datenträger (1) nach Anspruch 12 oder 13, **dadurch gekennzeichnet, dass** der Speicher einen veränderlichen Speicher (4, 5), insbesondere einen flüchtigen Speicher (5) und/ oder einen nichtvolatilen Speicher (4), umfasst.

15. Datenträger (1) nach einem der Ansprüche 12 bis 14, **dadurch gekennzeichnet, dass** das Prüfmodul (9) und/ oder die Prüfsteuerung (8) als ein von einem Prozessor (2) des Datenträgers (1) ausführbares Programmmodul ausgebildet ist.

16. Datenträger (1) nach einem der Ansprüche 12 bis 15, **dadurch gekennzeichnet, dass** der portable Datenträger (1) eine Chipkarte oder eine Smart-Card ist.

17. Datenträger (1) nach Anspruch 16, **dadurch gekennzeichnet, dass** das Prüfmodul (9) und/oder die Prüfsteuerung (8) in ein Betriebssystem (7) der Chipkarte integriert ist.

18. Datenträger (1) nach einem der Ansprüche 12 bis 17, **dadurch gekennzeichnet, dass** das Prüfmodul (9) und/ oder die Prüfsteuerung (8) als Hardwaremodul ausgebildet ist.

19. Datenträger (1) nach einem der Ansprüche 12 bis 18, **dadurch gekennzeichnet, dass** bei dem Datenträger (1) im sicheren Zustand kein weiterer Zugriff auf den veränderlichen Speicher (4, 5) möglich ist.

20. Datenträger (1) nach einem der Ansprüche 12 bis 19, **dadurch gekennzeichnet, dass** die Prüfsteuerung (8) eingerichtet ist, bei jedem Aktivieren des Prüfmoduls (9) den zumindest einen Speicherbereich (14, 15, 16) des veränderlichen Speichers (4, 5) jeweils neu auszuwählen (S3).

21. Datenträger (1) nach Anspruch 20, **dadurch gekennzeichnet, dass** die Prüfsteuerung (8) eingerichtet ist, beim wiederholten Aktivieren des Prüfmoduls (9) die veränderlichen Speicherbereiche so auszuwählen, dass nach und nach alle Speicherbereiche des veränderlichen Speichers (4, 5) ausgewählt werden.

22. Datenträger (1) nach einem der Ansprüche 12 bis 21, **dadurch gekennzeichnet, dass** der zu prüfende Speicherinhalt (14,15,16) sicherheitskritische Daten umfasst, insbesondere einen kryptographischen Schlüssel.

23. Datenträger (1) nach einem der Ansprüche 12 bis 22, **dadurch gekennzeichnet, dass** der zu prüfende Speicherinhalt (14, 15, 16) nur dem Zweck des Vergleichens mit den vorgegebenen Speicherinhalt (11,12,13) dient.

24. Datenträger (1) nach einem der Ansprüche 12 bis 23, **dadurch gekennzeichnet, dass** der zu prüfende Speicherinhalt (14, 15, 16) in einem vorbestimmten Muster über den veränderlichen Speicher (4, 5) verteilt vorliegt.

## Claims

1. A method for securing memory contents in a memory (4, 5) of a portable data carrier (1) having a processor (2) and a random generator (10), comprising the steps of:
- comparing (S5) a memory content to be checked (14, 15, 16) of at least one storage area of the memory (4, 5) with a given memory content (11, 12, 13);
- continually repeating the comparing (S5) as long as the memory content (14, 15, 16) to be checked matches the given memory content (11, 12, 13); and
- putting the data carrier (1) in a secure state if the memory content (14, 15, 16) to be checked deviates from the given memory content (11, 12, 13), whereby the data carrier (1) in the secure state permits no access to the memory (4, 5);
**characterized in that** for each comparing (S5) there is determined randomly by the random generator (10) in each case a time span after the lapse (S2) of which the comparing step (S5) is carried out.

2. The method according to claim 1, **characterized in that** the memory (4, 5) is a variable memory.

3. The method according to either of claims 1 to 2, **characterized in that** for each comparing (S5) the at least one storage area (14, 15, 16) of the variable memory (4, 5) is newly selected in each case (S3).

4. The method according to claim 3, **characterized in that** the in each case newly selected storage areas (14, 15, 16) are selected (S3) upon the continual repeating such that all storage areas of the variable memory (4, 5) are gradually selected.

5. The method according to any of claims 1 to 4, **characterized in that** the given memory content (11, 12, 13) is stored in an invariable storage area (3) of the data carrier (1), in particular in a ROM memory.

6. The method according to claim 5, **characterized in that** the given memory content (11, 12, 13) is defined upon a creation of a ROM mask.

7. The method according to any of claims 1 to 6, **characterized in that** the memory content (14, 15, 16) to be checked comprises security-critical data, in particular a cryptographic key.

8. The method according to any of claims 1 to 7, **characterized in that** the memory content (14, 15, 16) to be checked serves only the purpose of comparing with the given memory content (11, 12, 13).

9. The method according to claim 8, **characterized in that** the memory content (14, 15, 16) to be checked is unchanged over the operation period of the data carrier.

10. The method according to any of claims 1 to 9, **characterized in that** the memory content (14, 15, 16) to be checked is present distributed over the variable memory (4, 5) in a predetermined pattern.

11. The method according to any of claims 1 to 10, **characterized in that** the comparing step is effected at least for one memory content of an invariable storage area in order to check the function of the comparing itself.

12. A portable data carrier (1), comprising a processor (2), a memory (4, 5), a random generator (10) and a check module (9) which is set up to compare a memory content (14, 15, 16) to be checked of at least one storage area of the variable memory (4, 5) with a given memory content (11, 12, 13), whereby
- the portable data carrier (1) furthermore comprises a check controller (8) which is set up to activate the check module (9) after the lapse (S2) of a randomly determined time span in each case as long as the memory content (14, 15, 16) to be checked matches the given memory content (11, 12, 13), whereby the time span is newly determined (S1) by the random generator (10) for each new activating;
- the check module (9) is set up to be activated by the check controller (8); and
- the check controller (8) is set up to put the data carrier (1) in a secure state (S7) if the memory content (14, 15, 16) to be checked deviates from the given memory content (11, 12, 13), whereby the data carrier (1) in the secure state permits no access to the memory (4, 5).

13. The data carrier (1) according to claim 12, **characterized in that** the data carrier (1) comprises an invariable memory (4, 5), in particular a ROM memory, in which at least the given memory content (11, 12, 13) is stored.

14. The data carrier (1) according to claim 12 or 13, **characterized in that** the memory comprises a variable memory (4, 5), in particular a volatile memory (5) and/or a nonvolatile memory (4).

15. The data carrier (1) according to any of claims 12 to 14, **characterized in that** the check module (9) and/or the check controller (8) is configured as a program module executable by a processor (2) of the data carrier (1).

16. The data carrier (1) according to any of claims 12 to 15, **characterized in that** the portable data carrier (1) is a chip card or a smart card.

17. The data carrier (1) according to claim 16, **characterized in that** the check module (9) and/or the check controller (8) is integrated into an operating system (7) of the chip card.

18. The data carrier (1) according to any of claims 12 to 17, **characterized in that** the check module (9) and/or the check controller (8) is configured as a hardware module.

19. The data carrier (1) according to any of claims 12 to 18, **characterized in that** with the data carrier (1) in the secure state no further access to the variable memory (4, 5) is possible.

20. The data carrier (1) according to any of claims 12 to 19, **characterized in that** the check controller (8) is set up to newly select in each case the at least one storage area (14, 15, 16) of the variable memory (4, 5) (S3) upon each activating of the check module (9).

21. The data carrier (1) according to claim 20, **characterized in that** the check controller (8) is set up to select the variable storage areas, upon repeated activating of the check module (9), such that all storage areas of the variable memory (4, 5) are gradually selected.

22. The data carrier (1) according to any of claims 12 to 21, **characterized in that** the memory content (14, 15, 16) to be checked comprises security-critical data, in particular a cryptographic key.

23. The data carrier (1) according to any of claims 12 to 22, **characterized in that** the memory content (14, 15, 16) to be checked serves only the purpose of comparing with the given memory content (11, 12, 13).

24. The data carrier (1) according to any of claims 12 to 23, **characterized in that** the memory content (14, 15, 16) to be checked is present distributed over the variable memory (4, 5) in a predetermined pattern.

## Revendications

1. Procédé de protection de contenus de mémoire dans une mémoire (4, 5) d'un support de données portable (1) comportant un processeur (2) et un générateur aléatoire (10), comprenant les étapes :
- comparaison (S5) d'un contenu de mémoire à vérifier (14, 15, 16) d'au moins une zone de mémoire de la mémoire (4, 5) avec un contenu de mémoire donné (11, 12, 13) ;
- réitération continuelle de la comparaison (S5) tant que le contenu de mémoire (14, 15, 16) à vérifier coïncide avec le contenu de mémoire donné (11, 12, 13) ;
- mise du support de données (1) dans un état sûr dans le cas où le contenu de mémoire à vérifier (14, 15, 16) diffère du contenu de mémoire donné (11, 12, 13), le support de données (1) ne permettant, à l'état sûr, pas d'accès à la mémoire (4, 5);
**caractérisé en ce que**, pour chaque comparaison (S5), un laps de temps après l'écoulement (S2) duquel l'étape de la comparaison (S5) est exécutée est respectivement déterminé aléatoirement par le générateur aléatoire (10).

2. Procédé selon la revendication 1, **caractérisé en ce que** la mémoire (4, 5) est une mémoire modifiable.

3. Procédé selon une des revendications 1 ou 2, **caractérisé en ce que**, pour chaque comparaison (S5), la au moins une zone de mémoire (14, 15, 16) de la mémoire modifiable (4, 5) est respectivement sélectionnée de nouveau (S3).

4. Procédé selon la revendication 3, **caractérisé en ce que** les zones de mémoire (14, 15, 16) respectivement sélectionnées de nouveau sont sélectionnées (S3) de telle manière lors de la réitération continuelle que toutes les zones de mémoire de la mémoire modifiable (4, 5) sont peu à peu sélectionnées.

5. Procédé selon une des revendications de 1 à 4, **caractérisé en ce que** le contenu de mémoire donné (11, 12, 13) est stocké dans une zone de mémoire non modifiable (3) du support de données (1), notamment dans une mémoire ROM.

6. Procédé selon la revendication 5, **caractérisé en ce que** le contenu de mémoire donné (11, 12, 13) est défini lors d'une génération d'un masque ROM.

7. Procédé selon une des revendications de 1 à 6, **caractérisé en ce que** le contenu de mémoire à vérifier (14, 15, 16) comprend des données critiques pour la sécurité, notamment une clé cryptographique.

8. Procédé selon une des revendications de 1 à 7, **caractérisé en ce que** le contenu de mémoire à vérifier (14, 15, 16) ne sert qu'au but de la comparaison avec le contenu de mémoire donné (11, 12, 13).

9. Procédé selon la revendication 8, **caractérisé en ce que** le contenu de mémoire à vérifier (14, 15, 16) est inchangé pendant le temps de fonctionnement du support de données.

10. Procédé selon une des revendications de 1 à 9, **caractérisé en ce que** le contenu de mémoire à vérifier (14, 15, 16) se trouve réparti à travers la mémoire modifiable (4, 5) selon une conformation prédéterminée.

11. Procédé selon une des revendications de 1 à 10, **caractérisé en ce que** l'étape de la comparaison a lieu au moins pour un contenu de mémoire d'une zone de mémoire non modifiable, afin de vérifier la fonction de comparaison elle-même.

12. Support de données portable (1) comportant un processeur (2), une mémoire (4, 5), un générateur aléatoire (10) et un module de vérification (9), qui est configuré pour comparer un contenu de mémoire à vérifier (14, 15, 16) d'au moins une zone de mémoire de la mémoire modifiable (4, 5) avec un contenu de mémoire donné (11, 12, 13),
- le support de données portable (1) comprenant en outre une commande de vérification (8) qui est configurée pour, respectivement après l'écoulement (S2) d'un laps de temps déterminé aléatoirement, activer le module de vérification (9) tant que le contenu de mémoire à vérifier (14, 15, 16) coïncide avec le contenu de mémoire donné (11, 12, 13), le laps de temps étant déterminé de nouveau (S1) par le générateur aléatoire (10) pour chaque nouvelle activation;
- le module de vérification (9) étant configuré pour être activé par la commande de vérification (8) ; et
- la commande de vérification (8) étant configurée pour mettre le support de données (1) dans un état sûr (S7) dans le cas où le contenu de mémoire à vérifier (14, 15, 16) diffère du contenu de mémoire donné (11, 12, 13), le support de données (1) ne permettant, à l'état sûr, pas d'accès à la mémoire (4, 5).

13. Support de données (1) selon la revendication 12, **caractérisé en ce que** le support de données (1) comprend une mémoire non modifiable (4, 5), notamment une mémoire ROM dans laquelle au moins le contenu de mémoire donné (11, 12, 13) est stocké.

14. Support de données (1) selon la revendication 12 ou 13, **caractérisé en ce que** la mémoire comprend une mémoire modifiable (4, 5), notamment une mémoire volatile (5) et/ou une mémoire non volatile (4).

15. Support de données (1) selon une des revendications de 12 à 14, **caractérisé en ce que** le module de vérification (9) et/ou la commande de vérification (8) est réalisé(e) sous forme d'un module de programme exécutable par un processeur (2) du support de données (1).

16. Support de données (1) selon une des revendications de 12 à 15, **caractérisé en ce que** le support de données portable (1) est une carte à puce ou une smart card.

17. Support de données (1) selon la revendication 16, **caractérisé en ce que** le module de vérification (9) et/ou la commande de vérification (8) est intégré(e) dans un système d'exploitation (7) de la carte à puce.

18. Support de données (1) selon une des revendications de 12 à 17, **caractérisé en ce que** le module de vérification (9) et/ou la commande de vérification (8) est réalisé(e) sous forme de module hardware.

19. Support de données (1) selon une des revendications de 12 à 18, **caractérisé en ce que**, à l'état sûr du support de données (1), aucun autre accès à la mémoire modifiable (4, 5) n'est possible.

20. Support de données (1) selon une des revendications de 12 à 19, **caractérisé en ce que** la commande de vérification (8) est configurée pour sélectionner respectivement de nouveau (S3) lors de chaque activation du module de vérification (9) la au moins une zone de mémoire (14, 15, 16) de la mémoire modifiable (4, 5).

21. Support de données (1) selon la revendication 20, **caractérisé en ce que** la commande de vérification (8) est configurée pour sélectionner de telle manière les zones de mémoire modifiables lors de l'activation réitérée du module de vérification (9) que toutes les zones de mémoire de la mémoire modifiable (4, 5) sont peu à peu sélectionnées.

22. Support de données (1) selon une des revendications de 12 à 21, **caractérisé en ce que** le contenu de mémoire à vérifier (14, 15, 16) comprend des données critiques pour la sécurité, notamment une clé cryptographique.

23. Support de données (1) selon une des revendications de 12 à 22, **caractérisé en ce que** le contenu de mémoire à vérifier (14, 15, 16) ne sert qu'au but de la comparaison avec le contenu de mémoire donné (11, 12, 13).

24. Support de données (1) selon une des revendications de 12 à 23, **caractérisé en ce que** le contenu de mémoire à vérifier (14, 15, 16) se trouve réparti à travers la mémoire modifiable (4, 5) selon une conformation prédéterminée.
